# EUROPEAN PATENT APPLICATION

(11) **EP 3 467 962 A1**
(43) Date of publication of application: **10.04.2019**
(21) Application number: 17751116.9
(22) Date of filing: 30.05.2017
(51) Int. Cl.: H01R 13/703, H01R 24/78, H01R 13/506

(54) **SOCKET WITH A COMMUNICATION SYSTEM**

(30) Priority: 06.06.2016 ES 201630759
(71) Applicant: Simon, S.A.U., 08013 Barcelona (ES)
(72) Inventor: MIRANDA JOVE, Hector, 08013 Barcelona (ES); OBIOL BAYA, Jorge, 08013 Barcelona (ES)
(74) Representative: Pons Ariño, Angel
(86) International application number: PCT/ES2017/070374
(87) International publication number: WO 2017/212090

(57) **Abstract**

Socket with a communication system that can be embedded and which comprises at least one casing with at least one communication system, a control circuit and a system of connections for the socket and a receptacle for a plug to be connected into the socket, and the system of connections of the socket comprises terminals (23, 25) for direct connection to the power grid. The socket has been designed such that all the components it comprises are housed inside the casing of the socket from which project only the terminals necessary for connection to the power grid.

## Description

### OBJECT OF THE INVENTION

The present invention falls within the technical field of coupling devices intended to receive a plug. More specifically, it describes a flush-mountable socket comprising a communication system for communicating with other devices.

### BACKGROUND OF THE INVENTION

Smart connection solutions are known in the state of the art. These are devices that comprise communication systems in the inside thereof configured to enable a user to control the turning on and off of thereof, control the current intensity passing therethrough, etc.

However, said devices have some significant limitations. One of the main limitations is the relationship between the amperage at which they operate and their size, which makes it impossible to integrate them flush mounted in a wall.

The devices that are flush mounted in a wall must work according to the installation rules of each country or region between 10 A and 16 A, and the devices of the state of the art that work at this current intensity are too large to be integrated flush mounted in a wall in a universal box. To reduce their size, the solution found to date has been to reduce the amperage at which these devices can work, since the installation rules are not met, they cannot be integrated in a universal box that is flush mounted in a wall, and therefore, the solution has been to implement them as a closed assembly, with a plug, in order to be connected in a socket to the electrical grid.

That is to say, when an electrical apparatus is to be connected, it must first be connected to this smart connection device and then the smart connection device is connected to a socket of the electrical grid.

All smart connection devices must meet other standards that hamper the integration of the same in a reduced space, for example, the distance between the electrical contacts and the electronic components must be a minimum of 3 mm and these devices must withstand tests such as 5,000 cycles of being plugged and unplugged.

The devices of the state of the art, in order to overcome these drawbacks, reduce the amperage, which means that they cannot be flush mounted, or they are very large and cannot be integrated into a universal flush-mountable box and the solution used in the state of the art is to make them external.

### DESCRIPTION OF THE INVENTION

The present invention proposes a socket with a communication system. The key of this socket is that it is flush-mountable and that the communication system is arranged in the housing of the socket. Said housing preferably comprises a base and a cover of the base and the base of the socket is completely housed in a universal box flush mounted in the wall into which it is installed and is connected directly to the electrical grid by means of connection terminals.

This socket enables the problems described of the state of the art to be solved since it enables the installation thereof with a direct connection to the electrical grid and it is flush mounted in the wall. To do so, the socket has been designed such that all the components it comprises are housed in the housing of the socket, from which the terminals necessary for connecting to the electrical grid protrude.

When the socket is flush mounted in the wall, only the outer face of the cover of the socket, which is the trim, can be seen from the outside. Therefore, the external appearance perceived by a user is that it is a standard plug, but in fact, inside the base there is a communication system that enables the user to remotely control the socket and the communication of the same with other devices.

Some of the possible embodiments of the socket, for example, comprise an on/off system, comprise a timer that can be controlled from a mobile application, etc.

Thus, a user that connects an electric apparatus in the socket can remotely control the turning off and on thereof, the current intensity that is sent to it to control, for example, the light intensity if it has been connected to a lamp, times can be programmed at which current is allowed to pass through, for example, to connect a heater only until a certain time of night, turn off an electric device connected to the socket if it is detected that it is consuming too much power, etc.

Some of the uses of the socket are measuring the current, turning timers on and off (the time it is turned on or off can be selected), delayed turn on and off (the socket is turned on and off after a certain period of time has passed), beacon (may comprise LEDs that emit light to, for example, guide a pathway), programmed turn on and off (the socket is turned on or off following a specific programme), current threshold limiter, and enables an estimated calculation of bill that the power company can carry out depending on the current detected passing through.

Likewise, the openings of the socket are surrounded by a casing that is a piece extending from the base on the plate, the PCA containing elements of the control system and elements of the communication system, to the head of the contact providing mechanical stability, such that the formation of micro breaks in the welds of the openings and other components is minimized, providing a highly durable socket with regards to the connection and disconnection of plugs in the same.

An advantage associated with the socket with a communication system of the present invention is that, due to being flush mounted and fixedly connected to the electrical grid, it falls within the classification of fixed electrical installations. Therefore, the socket proposed may work with currents up to 16 A, being flush mounted in the wall and without the need for an intermediate device between the socket and the device that is to be connected to the electrical grid. This enables any type of household appliance to be connected to the socket.

The socket with a communication system meets the socket regulation for fixed electrical installations, as described in the paragraph above. In order to verify that the socket meets the electrical installation regulation, a control is carried out on the aperture of the relay contacts to maximise the current and therefore the power that the socket can control. This control consists of a synchronisation of the closing of the relay when the voltage is 0, in order to reduce the current peaks during the start-up, and a synchronisation of the opening of the relay when the current is zero, in order to reduce the stress of the relay in disconnection and connection.

### DESCRIPTION OF THE DRAWINGS

As a complement to the description provided herein and for the purpose of helping to make the characteristics of the invention more readily understandable, in accordance with a preferred practical embodiment thereof, said description is accompanied by a set of drawings constituting an integral part of the same, which by way of illustration and not limitation represent the following:
Figure 1 shows an exploded view of the socket with a communication system.
Figure 2 shows a perspective view of the first piece that forms the base when the housing comprises a base and a cover of the base.
Figure 3 shows a perspective view of the second piece that is joined to the first piece to form the base in the embodiment in which the housing comprises a base and a cover of the base.
Figure 4 shows a cross sectional view of the socket with a communication system.
Figure 5 shows a cross sectional view of the socket with a communication system wherein the cross section has been taken from a plane different to that of the cross section of Figure 4.
Figure 6a shows a plan view of the base of the socket.
Figure 6b shows a side view of the cover of the socket.

### PREFERRED EMBODIMENT OF THE INVENTION

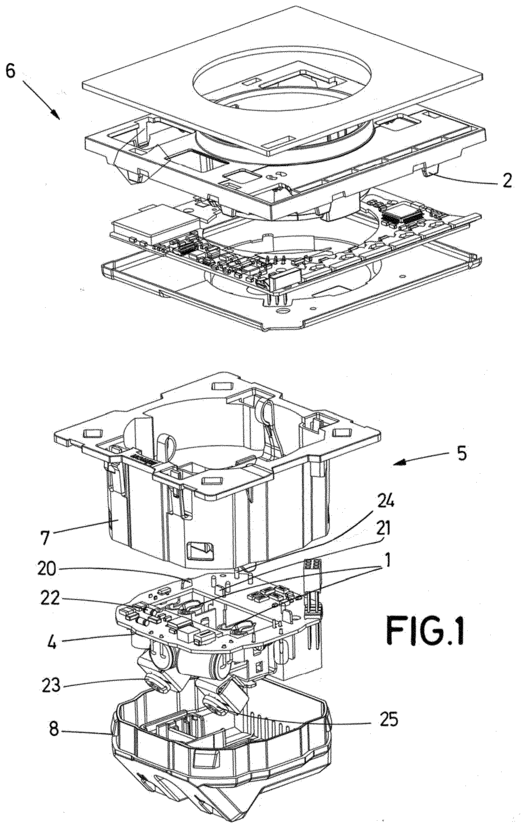

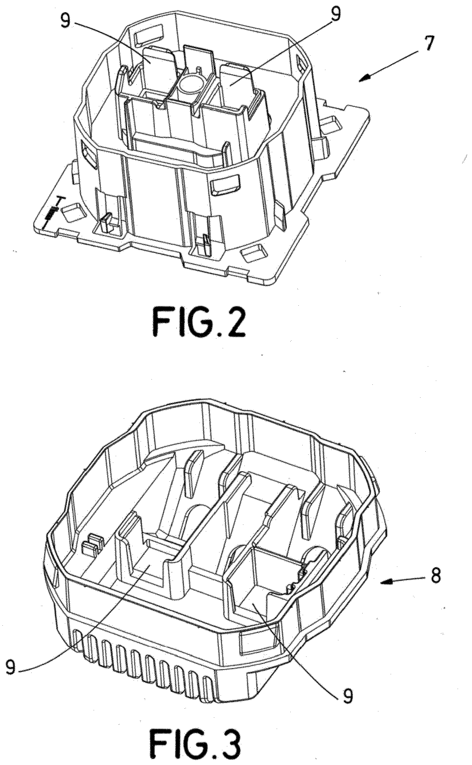

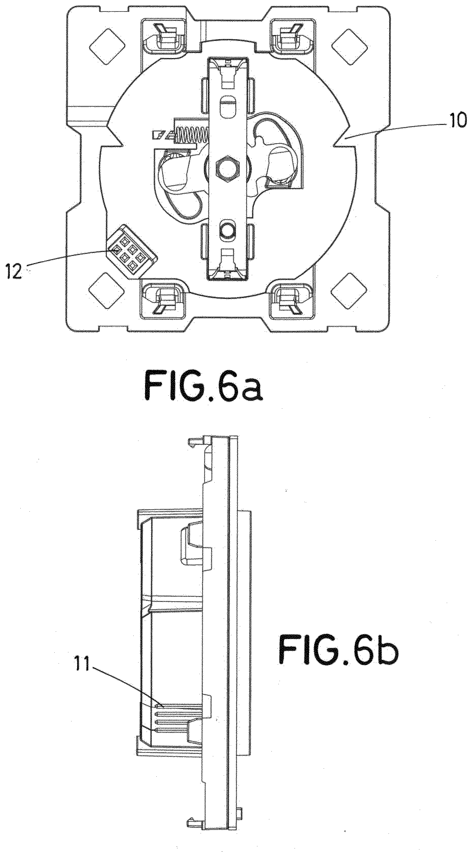

What follows is a description, with the help of Figures 1 to 6, of an exemplary embodiment of the invention.

The socket with a communication system of the present invention may be seen, for example, in Figure 1. Said socket has the essential characteristic that it is flush-mountable.

The socket with a communication system, which is flush-mountable, comprises at least one housing inside of which at least one communication system, a control circuit and a connection system of the socket are housed. Likewise, said housing comprises the receptacle for a plug to be connected to the socket.

In an exemplary embodiment, the housing is formed as a single piece. In another exemplary embodiment, the housing comprises a base (5) and a cover of the base (6). In an exemplary embodiment, the majority of the elements of the socket (elements of the communication system and the control circuit) are housed inside the base (5), and some, such as an antenna and part of the communication system for example, are housed in the cover of the base (6). In another exemplary embodiment, all the elements of the socket are housed in the base (5). The cover of the base (6) is the piece comprising the visible portion of the receptacle for the plug. In this case, part of the communication system, the control circuit and the connection system of the socket are found in the base (5).

The connection system of the socket comprises terminals for direct connection to the electrical grid and fastening means (2) in the housing configured to ensure the joint of the socket to the wall in which it is flush mounted.

Preferably, the communication system comprises at least one microprocessor, a transducer, an adaptation circuit and a radio-frequency antenna. In an exemplary embodiment of the invention, the socket further comprises another communication system with a radio-frequency antenna for wireless communication. Preferably, this additional communication system is located in the cover of the base (6).

The communication systems can communicate by means of a protocol selected from the group: Z-Wave, Wi-Fi (IEEE802.11), ZigBee, Bluetooth, ANT, WiMAX or proprietary protocol RF 343MHz, 868MHz, 915MHz, 27MHz, 2.4GHz, 5GHz, etc. or any other type. In an exemplary embodiment wherein the socket comprises two communication systems, one of them communicates with Z-wave and the other with Wi-Fi.

In the embodiment in which the socket comprises two communication systems, the microprocessor of each communication system communicates bidirectionally with the microprocessor of the other communication system.

In one embodiment of the invention, said control circuit of the socket comprises at least one microcontroller, a measurement circuit and a relay (3). The communication between the communication system and the control circuit is carried out through the microcontroller of the latter.

The control circuit may comprise, for example, a RTC (Real-time clock) that enables controlling the timer function of the socket.

In an exemplary embodiment in which the socket comprises two communication systems, the communication system with Wi-Fi protocol is the one that communicates with the exterior. In the case in which the socket only comprises one communication system, there would only be Z-wave and it would communicate with the exterior and with the microcontroller of the control circuit.

In an exemplary embodiment, the socket comprises an on/off system for turning on and off, which is part of the control circuit. In this case, the relay (3) of the control circuit is synchronised with the power supply and a microprocessor configured to establish communication with another remote device to control the turning on and off of the socket.

In the proposed socket, the opening for the neutral is connected directly to the neutral terminal (23) whilst a relay (3) is located between the phase and the corresponding phase terminal (25) to which it is connected. In the figure 1 can be seen the contact of the terminal to the neutral (22), the input contact of the relay (21) and the output contact of the relay (20).

In an exemplary embodiment such as the one shown in the figures, the housing comprises a base (5) and a cover of the base (6) configured to be joined to each other. In this case, the base (5) may comprise a first piece (7) and a second piece (8) configured to be joined to each other.

Likewise in an exemplary embodiment, the first piece (7) and the second piece (8) comprise insulating skirts (9), which are arranged one on top of the other when the first piece (7) and the second piece (8) are joined together, and that enable the insulation of the socket openings (1). The openings are the connection means for connecting a plug to the socket.

The socket may also comprise a push-button to turn it on and off. In the embodiments in which the push-button is comprised, it is arranged on the outer face of the housing. If the housing has a cover of the base, the push-button is on the outer face of said cover of the base.

As described, the insulating skirts are coupled one on top of the other, arranged such that they completely surround the electrical portion, that is to say, the openings (1). Thus, the electronic components of the socket are arranged on the periphery being encompassed between the skirts and the housing. Preferably, the components of the communication system and of the control circuit are in at least one PCA (4) that is arranged in said position between the skirts and the outer walls of the base (5), that is to say, the outer walls of the first and second piece (7, 8).

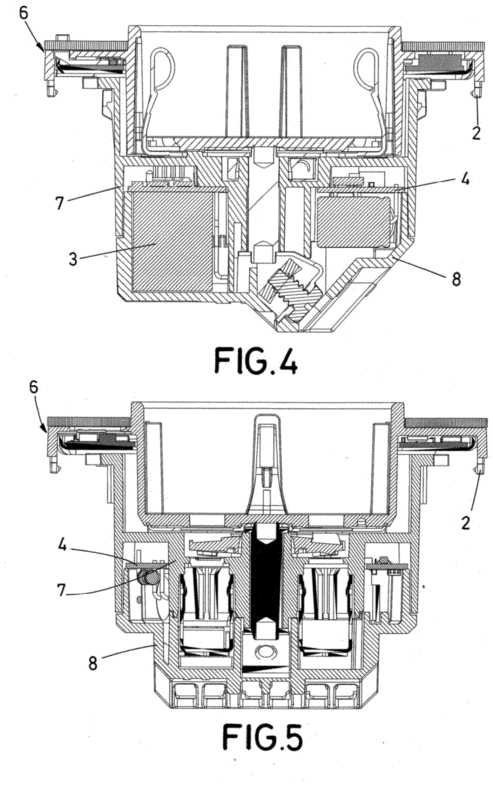

In an exemplary embodiment, such as the one shown in Figure 4, the terminals (1) are located at 45º and configured to facilitate the connection of the electrical grid cables from any direction in which they arrive at the socket.

In the exemplary embodiment in which the socket comprises a base and a cover of the base, said socket comprises a plurality of connections that join both pieces. In order to prevent user confusion when mounting the socket, it may comprise a series of marks intended to prevent the incorrect placement between the base and the cover of the base.

In an exemplary embodiment, said marks may be, for example, two eccentric, non-symmetrical notches (10), in one of the components (base or cover of the base) in order to guide the connection. Likewise, in order to guide said connection, it is also used as orientation the symmetry of the gap for connection to ground and the connection made up of a series of connection pins (11) that fit in the opposite element (base and cover of the base) which comprises gaps for corresponding connection pins (12) in which they are housed.

The connection pins enable the connection between the base and the cover of the base to be carried out, sparing the receptacle for the plug and in this way the cover of the socket can be used to place components.

## Claims

1. A socket with a communication system **characterised in that** it is flush-mountable and **characterised in that** it comprises a housing with at least a communication system, a control circuit and a connection system of the socket, and a receptacle for a plug to be connected in the socket comprising openings (1), and **in that** the connection system of the socket comprises terminals for direct connection to the electrical grid.

2. The socket with a communication system **characterised in that** it additionally comprises fastening means (2) in the housing configured to ensure the joint of the socket to a wall in which it is flush mounted.

3. The socket with a communication system according to claim 1, **characterised in that** the communication system comprises at least one microprocessor, a transducer, an adaptation circuit and an antenna.

4. The socket with a communication system according to claim 1, **characterised in that** the control circuit comprises at least one microcontroller, a measurement circuit and a relay (3).

5. The socket with a communication system according to claims 3 and 4, **characterised in that** the microprocessor and the microcontroller communicate bidirectionally and the microprocessor also communicates bidirectionally with at least one remote device.

6. The socket with a communication system according to claim 4, **characterised in that** it additionally comprises an on/off system that forms part of the control circuit and wherein the relay (3) is synchronised with the power supply and with a microprocessor configured to establish communication with another remote device to control the turning on and off of the socket.

7. The socket with a communication system according to claim 1, **characterised in that** the opening for the neutral is directly connected to the neutral terminal (23) and between the phase and the corresponding phase terminal (25) to which it is connected there is a relay (3).

8. The socket with a communication system according to claim 1, **characterised in that** it comprises two communication systems.

9. The socket with a communication system according to claim 8, **characterised in that** one of the communication systems uses the Z-Wave protocol to communicate with the other communication system, which in turn uses Wi-Fi to communicate with an external device.

10. The socket with a communication system according to claim 1, **characterised in that** the housing comprises a base (5) and a cover of the base (6) configured to be joined to each other, the base (5) being configured to be flush mounted in the wall.

11. The socket with a communication system according to claim 10, **characterised in that** the base (6) comprises a first piece (7) and a second piece (8) configured to be joined to each other.

12. The socket with a communication system according to claim 11, **characterised in that** the first piece (7) and the second piece (8) comprise insulating skirts (9), which are arranged one on top of the other when the first piece (7) and the second piece (8) are joined together, insulating the openings (1).

13. The socket with a communication system according to claim 1 to 10, **characterised in that** it additionally comprises insulating skirts (9) that insulate the electrical grid socket connection openings (1).

14. The socket with a communication system according to claim 1, **characterised in that** the terminals (1) are located at 45º, configured to facilitate the connection of the electrical grid cables from any direction in which they arrive at the socket.

15. The socket with a communication system according to claim 4, **characterised in that** the control circuit comprises a RTC (Real-time clock).

16. The socket with a communication system according to claim 1, **characterised in that** it additionally comprises a push-button to turn it on and off.
